# EUROPEAN PATENT SPECIFICATION

(11) **EP 2 167 596 B1**
(45) Date of publication and mention of the grant of the patent: **05.10.2011**
(21) Application number: 08774675.6
(22) Date of filing: 03.07.2008
(51) Int. Cl.: C09D 163/00, C09D 7/12, C09D 5/18, C08K 3/00, C08K 9/10, B41M 5/26, B41M 5/337

(54) **COATING COMPOSITIONS**
BESCHICHTUNGSZUSAMMENSETZUNGEN
COMPOSITIONS DE REVÊTEMENT

(30) Priority: 18.07.2007 EP 07112662
(43) Date of publication of application: 31.03.2010
(73) Proprietor: DataLase Ltd, Widnes Cheshire WA8 8FW (GB)
(72) Inventor: CAMPBELL, Jonathan, CH-4125 Riehen (CH); KAESER, Adolf, CH-4103 Bottmingen (CH); HOEKSTRA, Kathleen, Newark, DE 19711 (US); MISTRY, Kishor Kumar, Bradford West Yorkshire BD14 6LR (GB)
(74) Representative: Perry, Robert Edward
(86) International application number: PCT/EP2008/058547
(87) International publication number: WO 2009/010393

(56) References cited:
- WO-A-2007/031454
- WO-A-2008/083912
- US-A- 2 357 725
- US-A- 5 063 137
- US-A- 5 413 629
- US-A1- 2001 044 553
- US-A1- 2004 157 975
- US-B1- 6 425 947

## Description

The present invention relates to a coating composition for marking substrates, inter alia to a said coating composition comprising a pseudo-pigment in an encapsulated form, to a process for the preparation of said composition or pseudo-pigment, to unmarked or marked substrates coated with these compositions, and to a process for their preparation and marking.

Packaging usually needs to be marked with information such as logos, bar codes, expiry dates or batch numbers. One way to achieve this is by coating the packaging with a composition which upon treatment with energy such as heat forms a visible marking. When using laser irradiation as energy, the marking can be even so small that it is invisible or nearly invisible to the human eye provided that the used coating compositions allow for high precision and high contrast marking.

WO 2007/031454 A2 discloses coating compositions comprising a latent activator which is either a salt of an acid and an amine, or an acid derivative. The mentioned salt of an acid and an amine is e.g. ammonium sulfate or ammonium dihydrogen phosphate.

The coating compositions disclosed in WO 2007/031454 A2 can not be used for marking all kinds of substrates, for example certain polymer substrates, like thin polypropylene films, because certain substrates, e.g. said films, are damaged or even destroyed on laser irradiation before a satisfactory marking is obtained.

Hence, there is a need for new coating compositions which can be used for coating and laser marking of substrates which can not be coated and laser-marked in a high-precision, high contrast manner by the methods known so far.

It has now surprisingly been found that new coating compositions comprising not just one salt of an acid and an amine like those disclosed in WO 2007/031454 A2, but a mixture of at least two of such salts, can be successfully used for marking certain thus coated substrates, using a CO₂ IR laser, which substrates, e.g. thin polypropylene films, can not be clearly marked using the coating compositions disclosed in WO 2007/031454 A2. This beneficial effect of using salt mixtures occurs without the total amount of salts being increased. For example, a mixture of 6 g ammonium dihydrogen phosphate and 6 g ammonium sulfate is superior to 12 g ammonium sulfate alone or 12 g ammonium dihydrogen phosphate alone. An additional advantage of using a mixture of 6 g ammonium dihydrogen phosphate and 6 g ammonium sulfate versus 12 g ammonium sulfate alone or 12 g ammonium dihydrogen phosphate alone resides in the colour of the markings which are black or darker when using the mixture than when using ammonium sulfate alone or ammonium dihydrogen phosphate alone.

The present invention relates to a coating composition for marking substrates comprising
a) a solvent selected from water, C₁₋₄-alkanols, C₃₋₆-ketones, C₄₋₆-ethers, C₂₋₃-nitriles, nitromethane, dimethylsulfoxide, dimethylformamide, dimethylacetamide, *N*-methyl pyrolidone and sulfolane, wherein C₁₋₄-alkanols may be substituted with C₁₋₄-alkoxy, or mixtures thereof,
b) a salt of a phosphorus or boron containing acid and an amine or imine,
c) a salt of a non-phosphorus and non-boron containing acid and an amine or imine, and
d) a binder selected from vinylacetate, (meth)acrylic and styrene type homo and copolymers; carboxymethylcellulose; starch-type binders; and dimethylamino ethyl methacrylate / methyl methacrylate polymer,
but not comprising asbestos and glass fibre.

The coating composition of the present invention is not primarily intended for use in flameproofing and fire retarding and, does, hence, not include typical flameproofing substances, like asbestos and glass fibre, as disclosed in soviet patent application SU 1712380 A1, i.e. it is different from a typical flameproofing and fire-retarding composition, also with respect to the used binders.

While the binders in flameproofing and fire-retarding compositions are preferably water-insoluble and incombustible, e.g. halogenated, like especially chlorinated hydrocarbons, like halogenated naphthalene (e.g. Halowax [trade name]), polychlor diphenyl (e.g. Arochlor [trade name]), chlorinated rubber or neoprene (trade name) as mentioned e.g. in US patent 2,357,725, the binders in the coating composition of the present invention may be combustible. Combustibility of the binders may sometimes even be desired as explained further below in connection with the term "char former".

Examples of C₁₋₄-alkanols are methanol, ethanol, propanol, isopropanol or butanol, isobutanol, sec-butanol and *tert*-butanol. Examples of a C₁₋₄-alkoxyderivatives thereof are 2-ethoxyethanol and 1-methoxy-2-propanol. Examples of C₂₋₄-polyols are glycol and glycerol. Examples of C₃₋₆-ketones are acetone and methyl ethyl ketone. Examples of C₄₋₆-ethers are dimethoxyethane, diisopropylethyl and tetrahydrofurane. An example of a C₂₋₃-nitrile is acetonitrile.

More preferably, the solvent is water or a mixture of water and an organic solvent which is preferably different from a polyhydric alcohol, like especially a polyhydric alcohol having at least 5 carbon atoms, e.g. pentaerythritol or sorbitol.

Preferably, the organic solvent is selected from the group consisting of C₁₋₄-alkanols, C₂₋₄-polyols, C₃₋₆-ketones, dimethylformamide and dimethylacetamide, wherein C₁₋₄-alkanols and C₂₋₄-polyols may be substituted by C₁₋₄-alkoxy.

More preferably, the organic solvent is selected from the group consisting of C₁₋₄-alkanols, C₃₋₆-ketones, dimethylformamide and dimethylacetamide, wherein C₁₋₄-alkanols may be substituted by C₁₋₄-alkoxy.

Preferably, the ratio of water/organic solvent of the mixture of water and organic solvent is at least 1/2, and more preferably, at least 1/1.

Most preferably, the solvent is water.

The salt-forming phosphorus containing acid comprises inorganic acids, like phosphoric acid, thiophosphoric acid, fluorophosphoric acid, hexafluorophosphoric acid, polyphosphoric acid,and phosphorous acid, and phosphor-based organic acids such as phenyl phosphonic acid, methane phosphonic acid, phenyl phosphinic acid, 2-aminoethyl dihydrogenphosphate, phytic acid, 2-phospho-L-ascorbic acid, glycero dihydrogenphosphate, diethylenetriamine penta(methylenephosphonic acid) (DTPMP), hexamethylenediamine tetra(methylenephosphonic acid) (HDTMP), nitrilotris(methylene phosphonic acid) and 1-hydroxyethylidene diphosphonic acid.

In another most preferred embodiment, the acid is selected from phosphoric acid, polyphosphoric acid, and organic phosphoric acids and mixtures thereof.

The salt-forming boron containing acid is preferably boric acid (ortho-boric acid of the formula H₃BO₃), but comprises e.g. also meta-boric acid of the formula HBO₂ and poly-boric acid of the formula Hₙ₋₂BₙO₂ₙ₋₁).

The non-phosphorus and non-boron containing salt-forming acid does neither contain phosphorus nor boron atoms and can be inorganic or organic. Examples of such inorganic acids are sulfuric acid, fluorosulfuric acid, chlorosulfuric acid, nitrosylsulfuric acid, thiosulfuric acid, sulfamic acid, sulfurous acid, formamidinesulfinic acid, nitric acid, hydrochloric acid, chloric acid, perchloric acid, hydrobromic acid, hydriodic acid and hydrofluoric acid. Examples of such organic acids are sulfur-based organic acids such as 4-styrenesulfonic acid, *p*-toluenesulfonic acid, benzene sulfonic acid, xylene sulfonic acid, phenol sulfonic acid, methane sulfonic acid, trifluormethane sulfonic acid, sulfur-based organic polyacids, like poly(4-styrene sulfonic acid) and copolymers comprising 4-styrene sulfonic acid units such as poly(4-styrenesulfonic acid-*co*-maleic acid), and carboxylic acids such as tartaric acid, citric acid, dichloroacetic acid, trichloroacetic acid, oxalic acid and maleic acid.

Preferably, the non-phosphorus and non-boron containing acid is selected from the group consisting of sulfuric acid, thiosulfuric acid, sulfurous acid, hydrochloric acid, sulfur-based organic acids, carboxylic acids and mixtures thereof. In one most preferred embodiment, the acid is selected from the group consisting of sulfuric acid, hydrochloric acid, sulfur-based organic polyacids and mixtures thereof.

The salt-forming amine comprises amines of the formula NR¹R²R³, wherein R¹, R² and R³ can be the same or different and are hydrogen, C₁₋₃₀-alkyl, C₂₋₃₀-alkenyl, C₄₋₈-cycloalkyl, C₅₋₈-cycloalkenyl, aralkyl, aralkenyl or aryl, or R¹ is hydrogen, C₁₋₃₀-alkyl, C₂₋₃₀-alkenyl, C₄₋₈-cycloalkyl, C₅₋₈-cycloalkenyl, aralkyl, aralkenyl or aryl and R² and R³, together with the nitrogen of the amine of formula NR¹R²R³ form a 5- to 7-membered ring, whereby C₁₋₃₀-alkyl, C₂₋₃₀-alkenyl, C₄₋₈-cycloalkyl, C₅₋₈-cycloalkenyl, aralkyl and aralkenyl can be unsubstituted or substituted with NR⁴R⁵R⁶, imino, cyano, cyanamino, hydroxy and/or C₁₋₆-alkoxy, and aryl can be unsubstituted or substituted with NR⁴R⁵R⁶, cyano, cyanamino, hydroxyl, C₁₋₆-alkyl, and/or C₁₋₄-alkoxy, wherein R⁴, R⁵ and R⁶ can be the same or different and are hydrogen, C₁₋₆-alkyl, C₄₋₈-cycloalkyl or aryl.

Examples of C₁₋₃₀-alkyl are methyl, ethyl, propyl, isopropyl, butyl, sec-butyl, isobutyl, *tert*-butyl, pentyl, hexyl, heptyl, octyl, nonyl, decyl, undecyl, dodecyl, myristyl, palmityl, stearyl and arachinyl. Examples of C₂₋₃₀-alkenyl are vinyl, allyl, linolenyl, docosahexaenoyl, eicosapentaenoyl, linoleyl, arachidonyl and oleyl. Examples of C₄₋₈-cyclalkyl are cyclopentyl and cyclohexyl. An example of C₅₋₈-cycloalkenyl is cyclohexenyl. Examples of aralkyl are benzyl and 2-phenylethyl. Examples of aryl are phenyl, 1,3,5-triazinyl or naphthyl. Examples of C₁₋₆-alkyl are methyl, ethyl, propyl, isopropyl, butyl, *sec*-butyl, isobutyl, *tert*-butyl, pentyl, and hexyl. Examples of C₁₋₄-alkoxy are methoxy, ethoxy, propoxy, isopropoxy and butoxy.

Preferred C₁₋₃₀-alkyls are C₁₋₁₀-alkyl, more preferred C₁₋₃₀-alkyls are C₁₋₆-alkyl. Preferred C₂₋₃₀-alkenyls are C₂₋₁₀-alkyenyl, more preferred C₂₋₆-alkenyl. Examples of C₁₋₆-alkyl are given above. Examples of C₁₋₁₀-alkyl are methyl, ethyl, propyl, isopropyl, butyl, *sec-*butyl, isobutyl, *tert*-butyl, pentyl, hexyl, heptyl, octyl, nonyl and decyl. Examples of C₂₋₁₀-alkenyl and C₂₋₆-alkenyl are vinyl and allyl.

Examples of amines of formula NR¹R²R³ are ammonia, tris(hydroxymethyl)aminomethane, guanidine, methylamine, ethylamine, propylamine, butylamine, diethylamine, ethylene diamine, 1,2-diaminopropane, ethanolamine, triethanolamine, cyclohexylamine, aniline, melamine, methylolmelamine, pyrrole, morpholine, pyrrolidine and piperidine.

Preferably, the amine is of formula NR¹R²R³, wherein R¹ is hydrogen and R² and R³ are as defined above.

More preferably, the amine is of formula NR¹R²R³, wherein R¹ and R² are hydrogen and R³ is as defined above.

Most preferably, the amine is of formula NR¹R²R³, wherein R¹ , R² and R³ are hydrogen, i.e. ammonia.

The salt-forming imine comprises imines of the formula (R¹R²)C=NR³ wherein R¹, R² and R³ can be the same or different and are hydrogen, or a suitable organic radical. Preferably R³ is hydrogen. A preferred imine is polyethylene imine which is available on the market under the trade name "Lupasol P".

The salt mixtures used in the coating compositions of the present invention comprise at least two salts different from each other which can be formed from the same or different base, e.g. both salts can be formed from ammonia, but need to be formed from different acids, e.g. phosphoric acid and sulfuric acid. Preferably, one of the two salts in the mixture is derived from phosphoric acid or another phosphorus containing acid. Hence, preferred salt mixtures comprise e.g. ammonium dihydrogen phosphate and ammonium sulfate; ammonium dihydrogen phosphate and ammonium chloride; ammonium dihydrogen phosphate and N-(2-hydroxy-ethyl)-ammonium-citrate or N-(2-hydroxy-ethyl)-ammonium-tartrate; the Lupasol P salt of boric acid and ammonium sulfate; ammonium dihydrogen phosphate and the Lupasol P salt of p-toluene sulfonic acid; and ammonium borate (e.g. triammonium borate, diammonium borate, monoammonium borate or ammonium pentaborate) and ammonium sulfate.

The weight ratio of the salts to each other ranges from 1:20 to 20:1, preferably from 1:10 to 10:1, more preferably from 1:5 to 5:1, even more preferably from 1:2 to 2:1, and is most preferably about 1:1.

The content of the salt mixture within the coating composition is about 1-60, preferably 2-40, more preferably 5-30, and most preferably 10-20, e.g. 15 per cent by weight based on the weight of the total composition.

The composition of the present invention also comprises a binder, preferably a polymeric binder, especially a combustible polymeric binder. A binder is everything that binds or sticks or helps to bind or stick the salt mixture in the coating compositions of the present invention to the substrate, but is different from a halogenated, like especially chlorinated hydrocarbon, e.g. halogenated naphthalene (e.g. Halowax [trade name]), polychlor diphenyl (e.g. Arochlor [trade name]), chlorinated rubber or neoprene (trade name).

Depending both on the nature of the substrate and the char former, in some occasions the char former can simultaneously function also as a binder. For example, sucrose can function both as a char former and as a binder on paper or packaging board as a substrate.

Examples of the polymeric binders are as defined herein before. The polymeric binder can also be a mixture of polymeric binders. It also can be a mixture of liquid monomers and a suitable photoinitiator that forms one of the above listed polymeric binders under UV irradiation after coating. In this case, the monomers function as the solvent.

Acrylic polymers are polymers formed from at least one acrylic monomer or from at least one acrylic monomer and at least one other ethylenically unsaturated polymer such as a styrene monomer, vinyl monomer, olefin monomer or maleic monomer.

Examples of acrylic monomers are (meth)acrylic acid or salts thereof, (meth)acrylamide, (meth)acrylonitrile, C₁₋₆-alkyl (meth)acrylates such as ethyl (meth)acrylate, butyl (meth)acrylate or hexyl (meth)acrylate, 2-ethylhexyl (meth)acrylate, substituted C₁₋₆-alkyl (meth)acrylates such as glycidyl methacrylate and acetoacetoxyethyl methacrylate, di(C₁₋₄-alkylamino)C₁₋₆-alkyl (meth)acrylates such as dimethylaminoethyl acrylate or diethylaminoethyl acrylate, amides formed from C₁₋₆-alkylamines, substituted C₁₋₆-alkylamines such as 2-amino-2-methyl-1-propane sulfonic acid, ammonium salt, or di(C₁₋₄-alkylamino)C₁₋₆-alkylamines and (meth)acrylic acid and C₁₋₄-alkyl halide adducts thereof.

Examples of styrene monomers are styrene, 4-methylstyrene and 4-vinylbiphenyl. Examples of vinyl monomers are vinyl alcohol, vinyl chloride, vinylidene chloride, vinyl isobutyl ether and vinyl acetate. Examples of olefin monomers are ethylene, propylene, butadiene and isoprene and chlorinated or fluorinated derivatives thereof such as tetrafluroethylene. Examples of maleic monomers are maleic acid, maleic anhydride and maleimide.

Examples of acrylic polymers are poly(methyl methacrylate) and poly(butyl methacrylate), as well as carboxylated acrylic copolymers as sold for example by Ciba under the tradenames Ciba® Glascol® LE15, LS20 and LS24, styrene acrylic copolymers as sold for example by Ciba under the tradenames Ciba® Glascol® LS26 and Ciba® Glascol® C44, and polyacrylic acid polymers as sold for example by Ciba under the tradename Ciba® Glascol® E11.

Styrene polymers are polymers formed from at least one styrene monomer and at least one vinyl monomer, olefin monomer and/or maleic monomer. Examples of styrene polymers are styrene butadiene styrene block polymers, styrene ethylene butadiene block polymers, styrene ethylene propylene styrene block polymers and styrene-maleic anhydride copolymers.

Examples of natural polymers are starch and carboxymethyl cellulose.

Examples of derivatives are oxidised starch, and starch-vinyl acetate graft copolymers.

The polymeric binders are known in the art and can be produced by known methods, e.g. by polymerisation starting from suitable monomers.

More preferably, the polymeric binder is an acrylic polymer as sold for example by Ciba under the tradename Ciba® Glascol® such as Ciba® Glascol® LE15, LS26, E11 or C44. Ciba® Glascol® LS 26 is a core shell polymer consisting of 70 weight parts 55/45 (w/w) styrene/2-ethylhexyl acrylate copolymer, which functions as the core polymer, and 30 weight parts of styrene/acrylic acid copolymer, which functions as the shell polymer.

Most preferably, the binder is selected from vinylacetate; (meth)acrylic and styrene type homo and copolymers, e.g. dimethylamino ethyl methacrylate or methyl methacrylate polymers; carboxymethylcellulose; and starch-type binders. Suitable binders based on vinylacetate, acrylic and styrene homo and copolymers are sold by Ciba® under the trade name LATEXIA®.

Preferably, the composition of the present invention also comprises a char forming compound (char former). A char forming compound or char former forms char when treated with a char-forming sufficient amount of energy (i.e. an amount of energy sufficient to form char), e.g. heat, e.g. generated by an IR-laser. Generally, a char forming compound is of high carbon and oxygen content.

Examples of char forming compounds are carbohydrates such as monosaccharides, disaccharides and polysaccharides, and derivatives thereof wherein the carbonyl group has been reduced to a hydroxyl group, so-called sugar alcohols.

Examples of monosaccharides are glucose, mannose, galactose, arabinose, fructose, ribose, erythrose and xylose. Examples of disaccharides are maltose, cellobiose, lactose and saccharose. Examples of polysaccharides are cellulose, starch, gum arabic, dextrin and cyclodextrin. Examples of sugar alcohols are meso-erythritol, sorbitol, mannitol and pentaerythritol.

Preferred char forming compounds are monosaccharides and disaccharides. More preferred char forming compounds are saccharose, galactose, and sucralose (trichloro-saccharose; 1,6-dichloro-1,6-dideoxy-β-D-fructofuranosyl-4-chloro-4-deoxy-α-D-glucopyranoside). The most preferred char forming compound is saccharose (also called sucrose)

Preferably, the composition of the present invention can also comprise additional components.

The additional components that may be included in the coating composition can be selected from any components suitable for improving the performance of the composition. An additional component can be a component that can absorb the incident energy and transfer this energy to the system thermally or otherwise such as an UV absorber or an IR absorber. Examples of other types of additional components are waxes, pigments, bases, stabilizers, antioxidants, rheology modifiers, wetting agents, biocides, smoke suppressants and taggants. Taggants are various substances added to a product to indicate its source of manufacture.

Preferably, the coating composition does not contain a dye or colour former.

An example of a UV absorber is 2-hydroxy-4-methoxybenzophenone.

IR absorbers can be organic or inorganic. Examples of organic IR absorbers are alkylated triphenyl phosphorothionates, for example as sold under the trade name Ciba® Irgalube® 211 or Carbon Black, for example as sold under the trade names Ciba® Microsol® Black 2B or Ciba® Microsol® Black C-E2.

Examples of inorganic IR absorbers are oxides, hydroxides, sulfides, sulfates and phosphates of metals such as copper, bismuth, iron, nickel, tin, zinc, manganese, zirconium and antimony, including antimony(V) oxide doped mica and tin(IV) oxide doped mica.

Pigments can be added as inorganic IR absorbers, for enhanced contrast between unimaged and imaged areas or as a security feature.

Examples of pigments which function as inorganic IR absorbers are kaolin, calcined kaolin, mica, aluminum oxide, aluminum hydroxide, aluminum silicates, talc, amorphous silica and colloidal silicon dioxide.

Examples of pigments which can be added for enhanced contrast between umimaged and imaged area are titan dioxide, calcium carbonate, barium sulfate, polystyrene resin, ureaformaldehyde resin, hollow plastic pigment.

Examples of pigments which can be added as a security feature are fluorescent pigments or magnetic pigments.

Bases can be added in order to adjust the pH of the composition. Suitable bases are alkali and earth alkaline metal hydroxides, or amines of formula NR¹R²R³, wherein R¹, R² and R³ are as defined above. Examples of alkali hydroxides are sodium hydroxide and potassium hydroxide.

Examples of rheology modifiers are xanthan gum, methylcellulose, hydroxypropyl methylcellulose, or acrylic polymers such as sold under the tradenames Ciba® Rheovis® 112, Ciba® Rheovis® 132 and Ciba® Rheovis® 152.

An example of a wetting agent is Ciba® Irgaclear® D, a sorbitol based clarifying agent.

Examples of biocides are Acticide® MBS, which includes a mixture of chloromethyl isothiazolinone and methyl isothiazolinone, Biocheck® 410, which includes a combination of 2-dibromo-2,4-dicyanobutane and 1,2-benzisothiazolin-3-one, Biochek® 721 M, which includes a mixture of 1,2-dibromo-2,4-dicyanobutane and 2-bromo-2-nitro-1,3-propandiol and Metasol® TK 100, which includes 2-(4-thiazolyl)-benzimidazole.

An example of a smoke suppressant is ammonium octamolybdate.

In preferred coating compositions of the present invention the binder is a polymeric binder, and/or they comprise additionally a char forming compound.

An especially preferred coating composition of the present invention comprises
a) a solvent as described above,
b) a salt of a phosphorus or boron containing acid and an amine or imine,
c) a salt of a non-phosphorus and non-boron containing acid and an amine or imine,
d) a binder as described above, and
e) a char forming compound.

The invention relates more particularly to a coating composition for marking substrates comprising
a) a solvent selected from water, C₁₋₄-alkanols, C₃₋₆-ketones, C₄₋₆-ethers, C₂₋₃-nitriles, nitromethane, dimethylsulfoxide, dimethylformamide, dimethylacetamide, N-methyl pyrolidone and sulfolane, wherein C₁₋₄-alkanols may be substituted with C₁₋₄-alkoxy, or mixtures thereof,
b) a salt of a phosphorus or boron containing acid and an amine or imine,
c) a salt of a non-phosphorus and non-boron containing acid and an amine or imine, and
d) a binder selected from vinylacetate, (meth)acrylic and styrene type homo and copolymers; carboxymethylcellulose; starch-type binders; and dimethylamino ethyl methacrylate / methyl methacrylate polymer, but not comprising asbestos and glass fibre.

In especially preferred compositions of the present invention the solvent is water; and/or the salt of a phosphorus or boron containing acid and an amine or imine is ammonium phosphate; and/or the salt of a non-phosphorus and non-boron containing acid and an amine or imine is ammonium sulfate; and/or the binder is selected from vinylacetate, (meth)acrylic and styrene type homo and copolymers; carboxymethylcellulose; starch-type binders; and dimethylamino ethyl methacrylate / methyl methacrylate polymer; and/or the char forming compound is selected from sucrose, sucralose, 2-ethanolamine and 2-(2'-aminoethoxy)-ethanol.

The composition of the present invention can comprise 10 to 95%, preferably 10 to 90%, and more preferably 20 to 80%, most preferably 30-70%, e.g. 50%, by weight of the solvent based on the weight of the total composition.

The composition of the present invention can comprise 1 to 80%, preferably 3 to 70%, more preferably 5 to 60%, and most preferably 10 to 50% by dry weight of the binder based on the weight of the total composition.

The composition of the present invention can comprise 0 to 50%, preferably 5 to 40%, more preferably 10 to 30% and most preferably 15 to 25%, for example about 20% by weight of the char forming compound based on the weight of the total composition.

The composition of the present invention can comprise 0 to 30%, preferably 0 to 20%, more preferably 0 to 10% by weight of additional components based on the weight of the total composition.

The composition of the present invention can consist of 1 to 60% by weight of the salt mixture, 10 to 95% by weight of the solvent, 1 to 80% by weight of the binder, 0 to 50% by weight of the char forming compound and 0 to 30% by weight of additional components, all based on the weight of the total composition, with the proviso that the sum of all components does not exceed 100%.

Preferably, the composition of the present invention can consist of 2 to 40% by weight of the salt mixture, 10 to 90% by weight of the solvent, 3 to 70% by weight of the binder, 5 to 40% by weight of the char forming compound and 0 to 20% by weight of additional components, all based on the weight of the total composition, with the proviso that the sum of all components does not exceed 100%.

More preferably, the composition of the present invention can consist of 5 to 30% by weight of the salt mixture, 20 to 80% by weight of the solvent, 5 to 60% by weight of the binder, 10 to 30% by weight of the char forming compound and 0 to 10% by weight of additional components, all based on the weight of the total composition, with the proviso that the sum of all components does not exceed 100%.

Most preferably, the composition of the present invention can consist of 10 to 20% by weight of the salt mixture, 30 to 70% by weight of the solvent, 10 to 50% by weight of the binder, 15 to 25% by weight of the char forming compound and 0 to 10% by weight of additional components, all based on the weight of the total composition, with the proviso that the sum of all components does not exceed 100%.

The coatings formed by the coating compositions of the present invention can be additionally coated, e.g. with a laminate layer or overprint varnish. If the material of the additional coating, e.g. the laminate layer or the overprint varnish, is selected so that it does not absorb at the wavelength of the imaging laser then the laser sensitive coating can be imaged through the laminate layer without damaging or marking the laminate. Also the additional coating, e.g. the laminate or overprint varnish is ideally chosen that it does not result in colouration of the coating before the energy treatment.

Another possibility to adapt the coating compositions to environments which are not directly compatible with the ingredients of the coating compositions is to hide or disguise them, e.g. by a kind of encapsulation, e.g. in a polymer shell. In contrast to the above-described additional coating by the laminate layer or overprint varnish, the coating compositions of the present invention are not first applied to the substrate before the coating thus obtained is protected or hidden by a second coating (top coating), but the actives of the coating composition (i.e. the salt mixture) are protected, e.g. by a kind of encapsulation, e.g. in a polymer shell, before the application of the coating composition to the substrate. The hidden, disguised or encapsulated laser-active ingredients form a pseudo pigment.

The present invention relates also to the coating compositions wherein
a) the salt of a phosphorus or boron containing acid and an amine or imine,
b) the salt of a non-phosphorus and non-boron containing acid and an amine or imine, and
c) the char forming compound
   are present in a hidden, disguised or encapsulated form, e.g. encapsulated in a polymer.

The present invention relates also to a composition comprising
a) a salt of a phosphorus or boron containing acid and an amine or imine,
b) a salt of a non-phosphorus and non-boron containing acid and an amine or imine,
c) a char forming compound, and
d) a polymeric encapsulating material.

The latter composition is a kind of a pseudo pigments composition which can be used in or as forming part of the coating compositions of the present invention and for the manufacture thereof.

Suitable polymers for forming the polymeric encapsulating material are e.g. melamine formaldehyde polymer, urea formaldehyde polymers, polyacrylic acid, styrene acrylic polymer, cross-linked polyacrylamide, crosslinked acrylamide- sodium acrylate copolymers, crosslinked polyhydroxyethylacrylates, gelatin, cellulose derivatives, polyvinyl alcohols, styrene-anhydride copolymers, polyvinylpyrrolidones, and starches.

The invention relates also to a process of manufacture of the above-mentioned pseudo pigments composition comprising emulsifying, e.g. by means of a high shear homogeniser, an aqueous composition comprising
a) a salt of a phosphorus or boron containing acid and an amine or imine,
b) a salt of a non-phosphorus and non-boron containing acid and an amine or imine,
c) a char forming compound, and
d) a suitable monomer mixture, or a suitable reactive resin, or a suitable aqueous polymer preparation
into water immiscible liquid in the presence of an amphiphatic stabilizer to form an emulsion having a mean aqueous droplet size diameter below 30 microns, preferably below 20 microns, e.g. between 1 and 20 microns; in case of starting from the above-mentioned monomer mixture inducing polymerisation reaction to form the encapsulation; in case of starting from the above-mentioned reactive resin inducing polycondensation, e.g. by addition of an acid, to form the encapsulation; removing the water to less than 5% of the pseudo pigment dry content, and isolating the pseudo pigments.

Suitable monomer mixtures are e.g.
methylene bisacrylamide (MBA) /acrylamide/acrylic acid and alkaline salts thereof e.g. sodium acrylate;
MBA/acrylic acid and alkaline salts thereof;
MBA /hydroxyethyl acrylate, or
MBA/vinyl pyrolidone

Suitable reactive resins are e.g. water soluble amino resin precondensates, such as ureaformaldehyde or melamine formaldehyde resins which on addition of an acid (e.g. formic acid), e.g. to about pH 4, undergo a polycondensation reaction to produce ureaformaldehyde and melamine formaldehyde polymers.

A suitable aqueous polymer preparation may e.g. be an aqueous solution, dispersion, emulsion, or microemulsion of a suitable polymer, like styrene acrylic polymer, gelatin, a cellulose derivative, a polyvinyl alcohol, polyacrylic acid, a styrene-anhydride copolymer, a polyvinylpyrrolidone, or a starch. A preferred aqueous polymer preparation is e.g. Ciba® Glascol® LS270, which is a 46% by weight microemulsion in water of a styrene acrylic polymer available from Ciba Specialty Chemicals.

A water immiscible liquid is e.g. a liquid hydrocarbon solvent, like such solvent comprising isoparaffins, e.g. Isopar G, which is isoparaffin with a distillation range of 155 to 179 °C available from ExxonMobil.

An amphiphatic stabilizer is e.g. a polymeric amphiphatic stabilizer, like a suitable stearyl methacrylate/methacrylic acid copolymer, e.g. a 20% by weight solution in Exxsol® D40, i.e. a dearomatised hydrocarbon solvent having a boiling point range from 154 °C to 187 °C available from ExxonMobil, of a 90/10 (w/w) stearyl methacrylate/methacrylic acid copolymer having a molecular weight of 40,000 g/mol.

When starting from the above-mentioned monomer mixture, the polymerisation reaction to form the encapsulation may be induced e.g. by adding a suitable hydroperoxide, like *tert-*butyl hydroperoxide.

When starting from the above-mentioned reactive resin, the polycondensation to form the encapsulation may be induced e.g. by addition of an acid, e.g. formic acid, e.g. to a pH of about 4.

The water may be removed to less than 5% of the pseudo pigment dry content for example by distillation, preferably in vacuum and elevated temperature, e.g. up to 150 °C, preferably up to 100 °C.

The pseudo pigments are isolated e.g. by filtration and dried, e.g. oven dried, e.g. at 30 °C.

The invention relates also to a substrate coated by a composition according to the present invention, e.g. a thus coated thin polypropylene film including a biaxially oriented polypropylene (BOPP) film, or a substrate selected from pharmaceutical dosage forms, food, paper, packaging board, adhesive labels, glass, textiles, polymers different from BOPP film (mentioned above), and metals.

The invention relates also to a process for preparing a marked substrate, comprising the steps of
i) coating a substrate with the composition of the present invention, and
ii) exposing those parts of the coated substrate, where a marking is intended, to energy by means of a laser beam.

The invention relates especially to the above process for preparing a marked substrate wherein the substrate is a thin polypropylene film including a biaxially oriented polypropylene (BOPP) film, or wherein the substrate is selected from pharmaceutical dosage forms, food, paper, packaging board, adhesive labels, glass, textiles, polymers different from BOPP film (mentioned above), and metals.

The invention relates also to the composition of the present invention in the form of a laser-markable transparent or white ink, e.g. a titanium dioxide based white ink.

### Examples

### Example 1

### Preparation of an acrylic binder

To a 1 litre resin pot fitted with mechanical stirrer, condenser, nitrogen inlet, temperature probe and feed inlets are placed 98.9 g water and 483.9 g Joncryl® 8078, a solution of an ammonium salt of a low molecular weight styrene acrylic copolymer. The contents are heated to 85 °C and degassed with nitrogen for 30 minutes. A monomer phase is prepared by mixing 192.5 g styrene with 157.5 g 2-ethylhexyl acrylate. An initiator feed is prepared by dissolving 1.97 g ammonium persulfate in 63.7 g water. When the reactor is at temperature and degassed, 0.66g ammonium persulfate are added to the reactor. After 2 minutes the monomer and initiator feeds are started appropriate to a 3 and 4 hour feed respectively. The reactor contents are maintained at 85 °C throughout the feeds. After completion of the feeds, the reactor contents are held for a further 1 hour at 85 °C before being cooled down to below 40 °C at which point 0.9 g Acticide LG, a biocide containing chlorinated and non-chlorinated methyl isothiazolones, is added. This results in an emulsion polymer of 49.2% solids, pH 8.3 and a Brookfield RVT viscosity of 1100 cPs.

### Example 2a:

Preparation of a coating composition 6 g Ammonium dihydrogen phosphate, 6 g ammonium sulphate and 15 g sucrose are dissolved in 33 g water. The resulting solution is then added dropwise over 15 minutes to 40 g of the acrylic binder prepared in example 1. Whilst adding the solution dropwise the pH is maintained above 7.5 by dropwise addition of aqueous ammonia. The mixture is stirred for 10 minutes.

### Comparative Example 1:

### Preparation of a comparative coating composition

12 g ammonium sulphate and 15 g sucrose are dissolved in 33 g water. The resulting solution is then added dropwise over 15 mins to 40 g of the acrylic binder prepared in example 1. Whilst adding the solution dropwise the pH is maintained above 7.5 by dropwise addition of aqueous ammonia. The mixture is stirred for 10 minutes.

### Comparative Example 2:

### Preparation of a comparative coating composition

12 g Ammonium dihydrogen phosphate and 15 g sucrose are dissolved in 33 g water. The resulting solution is then added dropwise over 15 mins to 40 g of the acrylic binder prepared in example 1. Whilst adding the solution dropwise the pH is maintained above 7.5 by dropwise addition of aqueous ammonia. The mixture is stirred for 10 minutes.

### Example 2b

### Preparation of a coating composition

A coating composition in analogy to example 2a is prepared, except that instead of 40 g of the acrylic binder of Example 1, 40 g of Ciba® Latexia® 319, a styrene butadiene lattice (solids content 50%, particle size 0.12 µm, glass transition temperature Tg 28°C), is used.

### Example 2c

### Preparation of a coating composition

A coating composition in analogy to example 2a is prepared, except that instead of 40 g of the acrylic binder of example 1, 40 g of Ciba® Latexia® 318, a styrene butadiene lattice (solids content 50%, particle size 0.12 µm, glass transition temperature Tg 22°C), is used.

### Example 2d

### Preparation of a coating composition

A coating composition in analogy to example 2a is prepared, except that instead of 40 g of the acrylic binder of example 1, 40 g of Ciba® Latexia® 302, a styrene butadiene lattice (solids content 50%, particle size 0.15 µm, glass transition temperature Tg 10°C), is used.

### Example 2e

### Preparation of a coating composition

A coating composition in analogy to example 2a is prepared, except that instead of 40 g of the acrylic binder of example 1, 40 g of Ciba® Latexia® 304, a styrene butadiene lattice (solids content 50%, particle size 0.15 µm, glass transition temperature Tg 20°C), is used.

### Example 2f

### Preparation of a coating composition

A coating composition is prepared by dissolving 6 g Ammonium dihydrogen phosphate, 6 g ammonium sulphate and 15 g sucrose in 17 g water.

### Example 2g

### Preparation of a coating composition

6 g Ammonium sulfate, 6 g ammonium dihydrogen phosphate and 15 g sucrose are dissolved in 53 g water. The resulting solution is then added slowly to 40 g Joncryl® 74, which is sold by BASF and which is an acrylic polymer emulsion having a solids content of 48.5% by weight, as it is being stirred.

### Example 2h

### Preparation of a coating composition

A coating composition in analogy to example 2g is prepared, except that instead of 40 g of Joncryl® 74, 40 g of Joncryl® 77, which is sold by BASF and which is an acrylic polymer emulsion having a solids content of 46% by weight, is used.

### Example 2i

### Preparation of a coating composition

A coating composition in analogy to example 2g is prepared, except that instead of 40 g of Joncryl® 74, 40 g of Joncryl® DFC 3030, which is sold by BASF and which is an acrylic polymer solution having a solids content of 47.4% by weight, is used.

### Example 2j

### Preparation of a coating composition

6 g Ammonium sulfate, 6 g ammonium dihydrogen phosphate and 15 g sucrose are dissolved in 33 g water. The resulting solution is then added slowly to 40 g Joncryl® DFC 3040, which is sold by BASF and which is an acrylic polymer emulsion having a solids content of 46% by weight, while it is being stirred, and the final mixture stirred for 0.5 hours.

### Example 2k

### Preparation of a coating composition

14.6 g Joncryl® DFC 3025, which is sold by BASF and which is an acrylic resin solution having a solids content of 34.2% by weight, and 22 g Joncryl® DFC 3040, which is also sold by BASF and which is an acrylic polymer solution having a solids content of 46% by weight, are combined. 6 g Ammonium sulfate, 6 g ammonium dihydrogen phosphate and 15 g sucrose are dissolved in 36.4 g water. The resulting solution is then added slowly to the binder mixture which is being stirred, and the final mixture stirred for 0.5 hours.

### Example 2l

### Preparation of a coating composition

6 g Ammonium sulfate, 6 g ammonium dihydrogen phosphate and 15 g sucrose are dissolved in 35 g water. The resulting solution is then added slowly to 40 g Joncryl® DFC 3050, which is sold by BASF and which is an acrylic polymer emulsion having a solids content of 48.2% by weight, and 3 g propylene glycol, and the final mixture stirred for 0.5 hours.

### Example 2m

### Preparation of a coating composition

30 g Joncryl® DFC 3040, which is sold by BASF and which is an acrylic polymer solution having a solids content of 46% by weight, and 10 g Joncryl® DFC 3050, which is an acrylic polymer emulsion having a solids content of 48.2% by weight, are combined. 6 g Ammonium sulfate, 6 g ammonium dihydrogen phosphate and 15 g sucrose are dissolved in 33 g water. The resulting solution is then added slowly to the resins and the final mixture stirred for 0.5 hours.

### Example 2n

### Preparation of a coating composition

6 g Ammonium sulfate, 6 g ammonium dihydrogen phosphate and 15 g sucrose are dissolved in 33 g water. The resulting solution is then added slowly to 40 g Joncryl DFC 3040, which is sold by BASF and which is an acrylic polymer solution having a solids content of 46% by weight, while it is being stirred, and the final mixture stirred for 0.5 hours. 3 g Bacote 20®, which is an aqueous solution of stabilized ammonium zirconium carbonate containing anionic hydroxylated zirconium polymers sold by MELChemicals, is added to the mixture.

### Example 2o

### Preparation of a coating composition

6 g Ammonium sulfate, 6 g ammonium dihydrogen phosphate and 15 g sucralose (1,6-dichloro-1,6-dideoxy-β-D-fructofuranosyl-4-chloro-4-deoxy-α-D-glucopyranoside) are dissolved in 33 g water. The resulting solution is then added dropwise over 15 mins to 40 g of the acrylic binder prepared in example 1, and the mixture is stirred for 10 minutes.

### Example 2p

### Preparation of a coating composition

6 g Ammonium dihydrogen phosphate and 6 g ammonium sulfate are stirred with 33.3 g ice. 14.7 g ethanolamine are added dropwise. The resulting solution is then added dropwise at ambient temperature over 15 mins to 40 g of the acrylic binder prepared in example 1, and the mixture is stirred for 10 minutes.

### Example 2q

### Preparation of a coating composition

6 g Ammonium dihydrogen phosphate and 6 g ammonium sulfate are stirred with 22.8 g ice. 25.2 g 2-(2'-Aminoethoxy)ethanol are added dropwise. The resulting solution is then added dropwise at ambient temperature over 15 mins to 40 g of the acrylic binder prepared in example 1, and the mixture is stirred for 10 minutes.

### Example 2r

### Preparation of a coating composition

6 g Ammonium dihydrogen phosphate and 6 g ammonium sulfate are added to 73 g of a cationic binder resin, i.e. dimethylamino ethyl methacrylate / methyl methacrylate polymer (15% solids) and the mixture stirred until the salts are fully dissolved. 15 g sucrose are added and the mixture is stirred until the sucrose is fully dissolved.

### Application of the coating compositions on paper and polymer film

The coating composition of example 2a and comparative examples 1 and 2 are applied by a 12 µm coating bar onto Xerox paper (coated "Cento Copy" paper purchased from M-Real, Biberist, Switzerland) respectively polyester film and dried to yield a transparent coating. The coatings are then imaged using a CO₂ IR laser (wavelength: 10'600nm, power: 2 W, diameter of laser beam: 0.35 mm, line speed 1000 mm/s) to yield markings as described in table 1 below.

**Table 1**

| Coating composition | Colour of markings | |
|---|---|---|
| | Xerox paper | PES film |
| Example 2a | dark brown | brown |
| Comp. example 1 | brown | no marks |
| Comp. example 2 | brown | light brown |

Table 1 shows that the coating composition of example 2a containing 6% by weight ammonium dihydrogen phosphate, 6% by weight ammonium sulphate and 15% by weight sucrose yields markings of darker (more blackish) brown colour on Xerox paper and polyester (PES) film compared to the comparative coating compositions of comparative examples 1 and 2, which contain 12% by weight ammonium sulphate and 15% by weight sucrose (comp. ex. 1), respectively, 12% by weight ammonium dihydrogen phosphate and 15% by weight sucrose (comp. ex. 2).

The coating composition of example 2a, 2b, 2c, 2d, 2e, 2f, 2g, 2h, 2i, 2j, 2k, 2l, 2m, 2n, 2o, 2p, 2q and 2r are applied by a 12 µm coating bar onto plain paper, coated paper (for example Xerox paper, i.e. paper suitable for use in copy machines or printers), and polymer films (for example polyester films) to yield transparent coatings. The coating compositions of examples 2g, 2h, 2i, 2j, 2k, 2l, 2m, 2n and 2r are additionally applied by a 12 µm coating bar onto Kraft paper The coatings are then imaged using a CO₂ IR laser (wavelength: 10'600nm, power: 0.5 to 4 W, diameter of laser beam: 0.35 mm, line speed 300 to 1000 mm/s) to yield a high contrast dark marking.

The coating and markings obtained with the coating composition of example 2n are also water proof, including proof to acidic water.

### Application of the coating compositions on thin Polymer films

The coating composition of example 2a is applied by a 12 µm coating bar onto 6 µm BOPP (biaxially oriented polypropylene) films and dried to yield a transparent coating. The coatings are then imaged using a CO₂ IR laser (wavelength: 10'600nm, power: 0.5 to 4 W, diameter of laser beam: 0.35 mm, line speed 300 to 1000 mm/s) to yield a high contrast dark marking without damaging the polymer film even when imaged with the laser from the non-coated, reverse side.

### Application of the coating compositions on packaging paper that had been pre-printed with a white background area

The coating composition of example 2a is applied by a 12 µm coating bar packaging paper that had been pre-printed with a white background area and dried to yield a transparent coating. The coatings are then imaged using a CO₂ IR laser (wavelength: 10'600nm, power: 0.5 to 4 W, diameter of laser beam: 0.35 mm, line speed 300 to 1000 mm/s) to yield a high contrast dark marking, which are also easily readable using a barcode reader.

### Application of the coating compositions on polymer films together with a top coat

The coating composition of example 2a is applied by a 12 µm coating bar onto polyester and polypropylene films. After drying, various top coat systems are applied including acrylate based, PVA and UV cured systems. The coatings are then imaged using a CO₂ IR laser (wavelength: 10'600nm, power: 0.5 to 4 W, diameter of laser beam: 0.35 mm, line speed 300 to 1000 mm/s) to yield a high contrast dark markings even through the top coats. The images are also easily readable using a barcode reader.

### Application of the coating compositions on edible substrates

The coating compositions of examples 2a and 2b are applied by a brush to the surface of edible substrates such as apples, oranges, bananas and eggs and dried to yield a transparent coating. The coatings are then imaged using a CO₂ IR laser (wavelength: 10'600nm, power: 0.5 to 4 W, diameter of laser beam: 0.35 mm, line speed 300 to 1000 mm/s) to yield a high contrast dark marking.

### Application of the coating compositions on tablets

Tablets are dipped into the coating compositions of example 2a and 2d for a few seconds and dried to yield a transparent coating. The coatings are then imaged using a CO₂ IR laser (wavelength: 10'600nm, power: 0.5 to 4 W, diameter of laser beam: 0.35 mm, line speed 300 to 1000 mm/s) to yield a high contrast dark marking.

### Example 3a

### Preparation of Laser Sensitive Pseudo Pigment

This example illustrates encapsulating, hiding or disguising the laser active components in a styrene acrylic polymer matrix.

An aqueous phase is prepared by dissolving 9 g of ammonium dihydrogen orthophosphate, 9 g of ammonium sulphate and 22.5 g of sucrose into 69.5 g of water followed by addition of 60 g of Ciba® Glascol® LS270, which is a 46% by weight microemulsion in water of a styrene acrylic polymer available from Ciba Specialty Chemicals. An oil phase is prepared by mixing 17 g of a 20% by weight solution in Exxsol® D40, i.e. a dearomatised hydrocarbon solvent having a boiling point range from 154 °C to 187 °C available from ExxonMobil, of a 90/10 (w/w) stearyl methacrylate/methacrylic acid copolymer having a molecular weight of 40,000 g/mol, which functions as amphiphatic stabilizer, and 300 g Isopar G, which is isoparaffin with a distillation range of 155 to 179 °C available from ExxonMobil. The above aqueous phase is added to the oil phase under a high shear homogeniser to form a water-in-oil emulsion having a mean aqueous droplet particle sizes of 5 µm. The emulsion formed is transferred to a 1-litre flask set up for distillation. The emulsion is subjected to vacuum distillation to remove the water along with the lower boiling point fractions of Isopar G. The vacuum distillation is continued to 90 °C until no further water is collected in the distillate. Next, the flask contents are cooled to 25 °C and the pseudo pigment is isolated by filtration and oven dried at 30 °C. The final product is a free flowing off-white pseudo pigment having a mean particle size diameter of 5 µm.

### Example 3b

### Laser Sensitive Pseudo Pigment

This example illustrates encapsulating, hiding or disguising the laser active components in a crosslinked polyacrylamide matrix.

A monomer solution is prepared by dissolving 1 g of methylene bisacrylamide into 53.7 g of 49.5% by weight aqueous acrylamide solution followed by addition of an aqueous solution consisting of 9 g of ammonium dihydrogen orthophosphate, 9 g of ammonium sulphate, 22.5 g of sucrose and 71.5 g of water. The resulting mixture is adjusted to pH 5.0 by addition of 0.5 mL of 99% by weight acetic acid. An oil phase is prepared consisting of 17 g of a 20% by weight aqueous solution of a 90/10 (w/w) stearyl methacrylate/methacrylic acid copolymer having a molecular weight of 40,000 g/mol, which functions as amphiphatic stabilizer, and 300 g Isopar G, which is isoparaffin with a distillation range of 155 to 179 °C available from ExxonMobil. To the above monomer solution is added 1.65 mL of 1% by weight sodium sulphite solution and the resulting aqueous mixture is then added to the above oil phase under a high shear homogeniser to form a water-in-oil emulsion having a mean aqueous droplet particle sizes of 3 µm. The emulsion formed is transferred to a 1-litre flask and then deoxygenated by bubbling nitrogen throughout the emulsion. Next, 0.5 mL of 7% by weight tert-butyl hydroperoxide in Isopar G is added to initiate the polymerisation of the acrylic monomers. The flask contents give an exothermic reaction from 28 °C to 37 °C. After polymerisation, the flask is configured for vacuum distillation. The polymerised emulsion is subjected to vacuum distillation to remove water along with the lower boiling point fractions of Isopar G. The vacuum distillation is continued to 100 °C until no further water is collected in the distillate. Next, the flask contents are cooled to 25 °C and the pseudo pigment is isolated by filtration and oven drying at 50 °C. The final dried product is a free flowing off-white pseudo pigment having a mean particle size diameter of 3 µm.

### Example 3c

### Laser Sensitive Pseudo Pigment

This example illustrates encapsulating, hiding or disguising the laser active components in melamine-formaldehyde polymer shell.

An aqueous phase is prepared consisting of 9 g of ammonium dihydrogen orthophosphate, 9 g of ammonium sulphate, 22.5 g of sucrose, 14.4 g of Ciba® Alcapsol® P-604, which is a 18% by weight aqueous solution of an anionic polyacrylamide available from Ciba Specialty Chemicals, 35.7 g of Beetle® PT-3336, which is a 70% by weight solution of a melamine formaldehyde resin available from BIP Limited, and 68.1 g of water. This mixture is adjusted to pH 4.0 by addition of 1.5 mL of 95% by weight formic acid. An oil phase is prepared consisting of 17 g of a 20% by weight solution in Exxsol® D40, i.e. a dearomatised hydrocarbon solvent having a boiling point range from 154 °C to 187 °C available from ExxonMobil, of a 90/10 (w/w) stearyl methacrylate/methacrylic acid copolymer having a molecular weight of 40,000 g/mol, which functions as amphiphatic stabilizer, and 300 g Isopar G, which is isoparaffin with a distillation range of 155 °C to 179 °C available from ExxonMobil. The above aqueous phase is added to the oil phase under a high shear homogeniser to form a water-in-oil emulsion having a mean aqueous droplet particle size of 18 µm. The emulsion formed is transferred to a 1-litre flask and then the contents warmed to 60 °C to cure the melamine formaldehyde resin. Next, the flask is configured for vacuum distillation and the contents subjected to distillation to remove the water along with the lower boiling point fractions of Isopar G. The vacuum distillation is continued to 100 °C until no further water is collected in the distillate. Finally, the flask contents are cooled to 25 °C and the pseudo pigment is isolated by filtration and oven drying at 50 °C. The final product is a free flowing pale yellow pseudo pigment having a mean particle size diameter of 18 µm.

### Application of the pseudo pigments on paper and Polymer film

The pseudo pigments from example 3a, 3b, respectively, 3c (9.0 g) are added slowly to a mixture of Ciba® Latexia® 319, a styrene butadiene lattice (solids content 50%, particle size 0.12 µm, glass transition temperature Tg 28°C), (6.7 g) and water (5.5 g). The mixture is stirred for 10 minutes.

The obtained coating composition is then applied by a 12 µm coating bar onto Xerox paper and polypropylene and dried to yield a transparent coating. The coatings are then imaged using a CO₂ IR laser (wavelength: 10'600nm, power: 0.5 to 4 W, diameter of laser beam: 0.35 mm, line speed 300 to 1000 mm/s) to yield a high contrast dark markings. The images are also easily readable using a barcode reader.

### Application of the pseudo pigments on labels

### Polypropylene Label

The pseudo pigment from example 3a is added at 50% by weight concentration to a pressure sensitive adhesive, which is styrene butadiene, respectively, styrene acrylic acid copolymer. The so-treated adhesive is then coated with a 12 µm coating bar onto polypropylene film to form a laser sensitive label. After application to secondary packaging board, the labels are imaged using a CO₂ IR laser (wavelength: 10'600nm, power: 0.5 to 4 W, diameter of laser beam: 0.35 mm, line speed 300 to 1000 mm/s) to yield a high contrast dark marking.

### Example 4

### Transparent gravure ink (aqueous based ink that has excellent sensitivity to imaging with a CO₂ laser at 10600nm; increased polymer content at the following sugar & salt levels: 10% sucrose, 6% salts)

### Formulation:

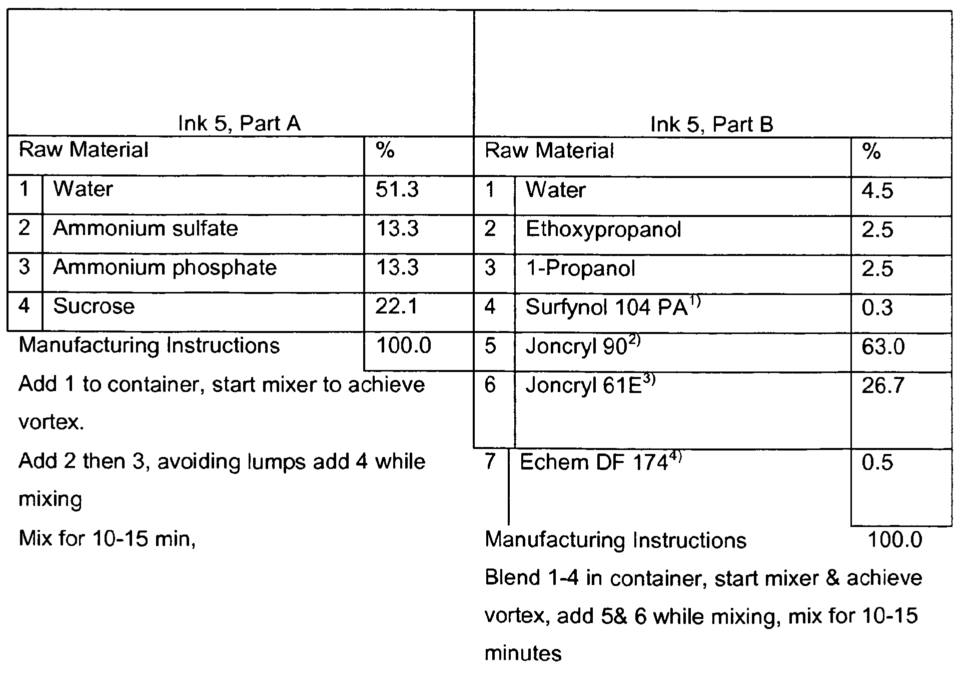

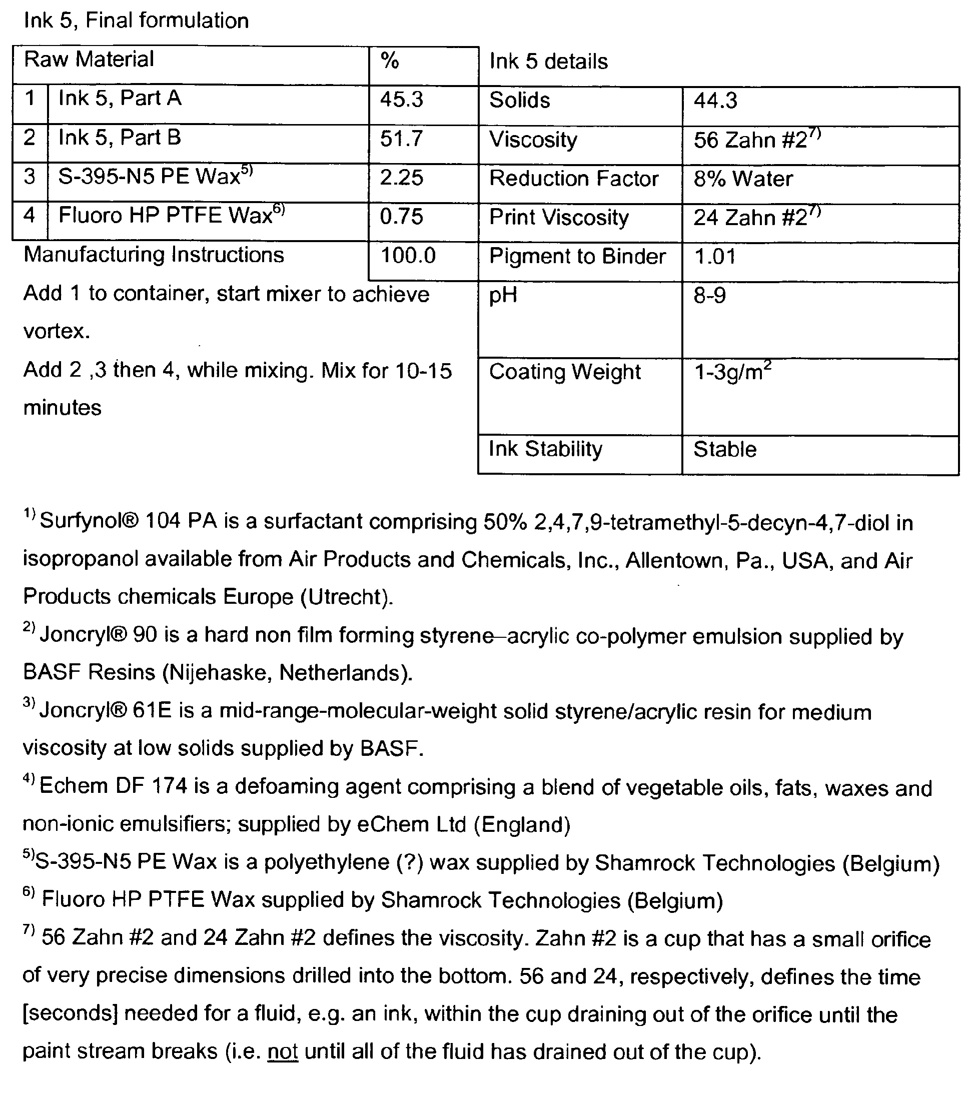

Laser settings can vary in speed, power and frequency depending on the design and quality required.

If desired the above ink formulation may be further optimized for press stability and printability. The additions to the formulation may include solvent changes, plasticizer, wax, adhesion promoters, silica, anti foam, surfactants, surface modifiers, pH adjusters etc.

### Example 5

Titanium dioxide based white ink that has excellent photosensitivity to imaging with a CO₂ laser at 10600nm. It is useful for gravure print and flexo print and gives dark images on a white background for virtual label applications.

### Formulation:

Ink 9; aqueous based ink that has excellent sensitivity to imaging with a CO₂ laser at 10600nm; balanced sugar & salt levels; 15% TiO₂

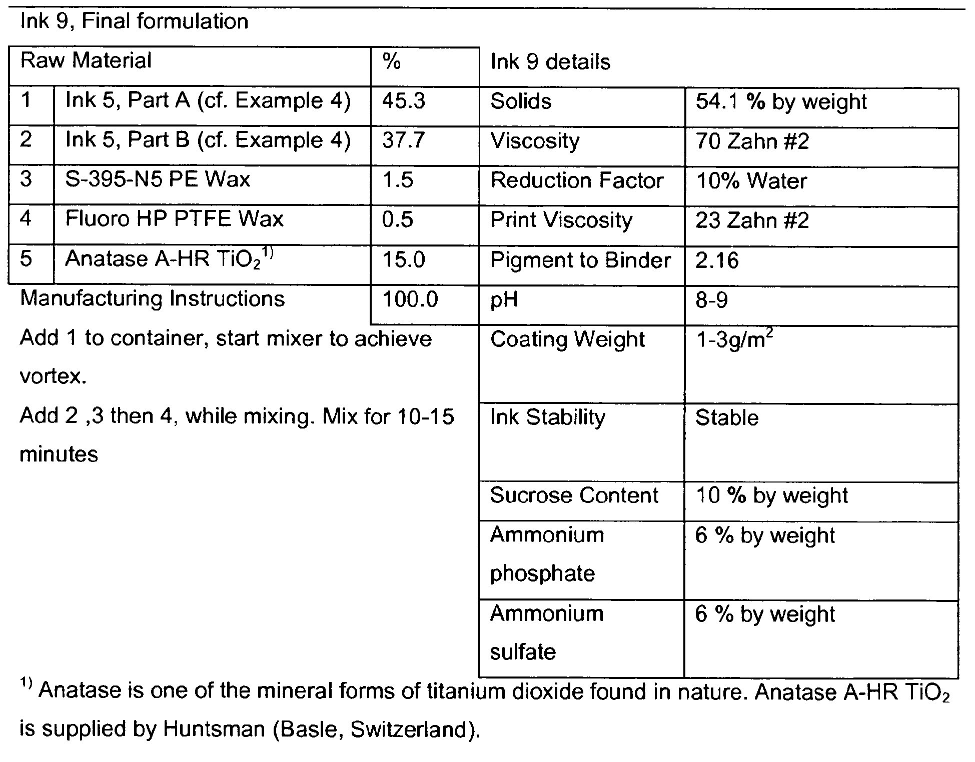

If desired the above ink formulation may be further optimized for press stability and printability. The additions to the formulation may include solvent changes, plasticizer, wax, adhesion promoters, silica, anti foam, surfactants, surface modifiers, pH adjusters etc.

## Claims

1. A coating composition for marking substrates comprising
a) a solvent selected from water, C₁₋₄-alkanols, C₃₋₆-ketones, C₄₋₆-ethers, C₂₋₃-nitriles, nitromethane, dimethylsulfoxide, dimethylformamide, dimethylacetamide, N-methyl pyrolidone and sulfolane, wherein C₁₋₄-alkanols may be substituted with C₁₋₄-alkoxy, or mixtures thereof,
b) a salt of a phosphorus or boron containing acid and an amine or imine,
c) a salt of a non-phosphorus and non-boron containing acid and an amine or imine, and
d) a binder selected from vinylacetate, (meth)acryiic and styrene type homo and copolymers; carboxymethylcellulose; starch-type binders; and dimethylamino ethyl methacrylate / methyl methacrylate polymer,
but not comprising asbestos and glass fibre.

2. The composition according to claim 1 wherein the solvent is water.

3. The composition according to claim 1 or claim 2 wherein the salt of a phosphorus or boron containing acid and an amine or imine is ammonium phosphate.

4. The composition according to any one of claims 1-3 wherein the salt of a non-phosphorus and non-boron containing acid and an amine or imine is ammonium sulfate.

5. The composition according to any one of claims 1-4 wherein the binder is selected from vinylacetate, (meth)acrylic and styrene type homo and copolymers; carboxymethylcellulose; starch-type binders; and dimethylamino ethyl methacrylate / methyl methacrylate polymer.

6. The composition according to any one of claims 1-5 additionally comprising a char forming compound selected from sucrose, sucralose, 2-ethanolamine and 2-(2'-aminoethoxy)ethanol.

7. The composition according to any one of claims 1-6 in the form of a laser-markable transparent or white ink.

8. The composition according to claim 6 wherein
a) the salt of a phosphorus or boron containing acid and an amine or imine,
b) the salt of a non-phosphorus and non-boron containing acid and an amine or imine, and
c) the char forming compound
are present in a hidden, disguised or encapsulated form.

9. The composition according to claim 8 wherein
a) the salt of a phosphorus or boron containing acid and an amine or imine,
b) the salt of a non-phosphorus and non-boron containing acid and an amine or imine, and
c) the char forming compound
are hidden, disguised or encapsulated in a polymer.

10. Pseudo pigments composition for use in a composition according to claim 8 comprising
a) the salt of a phosphorus or boron containing acid and an amine or imine,
b) the salt of a non-phosphorus and non-boron containing acid and an amine or imine,
c) the char forming compound, and
d) a polymeric encapsulating material.

11. The composition according to claim 9 or 10 wherein the encapsulating polymer is selected from melamine formaldehyde polymer, urea formaldehyde polymers, polyacrylic acid, styrene acrylic polymer, cross-linked polyacrylamide, crosslinked acrylamide- sodium acrylate copolymers, crosslinked polyhydroxyethylacrylates, gelatin, cellulose derivatives, polyvinyl alcohols, styrene-anhydride copolymers, polyvinylpyrrolidones, and starches.

12. Use of a composition according to any one of claims 1-11 for coating and laser marking of substrates.

13. A process of making the pseudo pigments according to claim 10 or 11 comprising emulsifying an aqueous composition comprising
a) the salt of a phosphorus or boron containing acid and an amine or imine,
b) the salt of a non-phosphorus and non-boron containing acid and an amine or imine,
c) the char forming compound, and
d) a suitable monomer mixture, or a suitable reactive resin; or a suitable aqueous polymer preparation
into water immiscible liquid in the presence of an amphiphatic stabilizer to form an emulsion having a mean aqueous droplet size diameter below 30 microns; in case of starting from the above-mentioned monomer mixture inducing polymerisation reaction to form the encapsulation; in case of starting from the above-mentioned reactive resin inducing polycondensation to form the encapsulation; removing the water to less than 5% of the pseudo pigment dry content, and isolating the pseudo pigments.

14. A substrate coated by a composition according to any one of claims 1-11.

15. A process for preparing a marked substrate, comprising the steps of
i) coating a substrate with the composition of any of claims 1-11, and
ii) exposing those parts of the coated substrate, where a marking is intended, to energy by means of a laser beam.

16. The substrate of claim 14 or the process of claim 15 wherein the substrate is a thin polypropylene film including a biaxially oriented polypropylene (BOPP) film.

17. The substrate of claim 14 or the process of claim 15 wherein the substrate is selected from pharmaceutical dosage forms, food, paper, packaging board, adhesive labels, glass, textiles, polymers, and metals.

## Patentansprüche

1. Beschichtungszusammensetzung zum Markieren von Substraten, umfassend:
a) ein Lösungsmittel, das aus Wasser, C₁₋₄-Alkanolen, C₃₋₆-Ketonen, C₄₋₆-Ethem, C₂₋₃-Nitrilen, Nitromethan, Dimethylsulfoxid, Dimethylformamid, Dimethylacetamid, N-Methylpyrrolidon und Sulfolan selektiert ist, wobei C₁₋₄-Alkanole durch C₁₋₄-Alkoxy oder Mischungen davon ersetzt werden können,
b) ein Salz einer phosphorhaltigen oder borhaltigen Säure und eines Amins oder Imins,
c) ein Salz einer nicht phosphorhaltigen und nicht borhaltigen Säure und eines Amins oder Imins, und
d) ein Bindemittel, das aus Vinylacetat, Homo- und Copolymeren des (Meth)acryl- und Styroltyps; Carboxymethylcellulose; Bindemittel des Stärketyps; und Dimethylaminoethylmethacrylat / Methylmethacrylat-Polymer selektiert ist,
aber keine Asbest- und Glasfaser umfasst.

2. Zusammensetzung nach Anspruch 1, wobei das Lösungsmittel Wasser ist.

3. Zusammensetzung nach Anspruch 1 oder Anspruch 2, wobei das Salz einer phosphorhaltigen oder borhaltigen Säure und eines Amins oder Imins Ammoniumphosphat ist.

4. Zusammensetzung nach einem beliebigen der Ansprüche 1-3, wobei das Salz einer nicht phosphorhaltigen oder nicht borhaltigen Säure und eines Amins oder Imins Ammoniumsulfat ist.

5. Zusammensetzung nach einem beliebigen der Ansprüche 1-4, wobei das Bindemittel aus Vinylacetat, Homo- und Copolymeren des (Meth)acryl und Styroltyps; Carboxymethylcellulose; Bindemittel des Stärketyps; und Dimethylaminoethylmethacrylat / Methylmethacrylat-Polymer selektiert ist.

6. Zusammensetzung nach einem beliebigen der Ansprüche 1-5, die zusätzlich eine char-bildende Verbindung umfasst, die aus Sucrose, Sucralose, 2-Ethanolamin und 2-(2'-Aminoethoxy)Ethanol selektiert ist..

7. Zusammensetzung nach einem beliebigen der Ansprüche 1-6 in Form einer lasermarkierbaren transparenten oder weißen Tinte.

8. Zusammensetzung nach Anspruch 6, wobei
a) das Salz einer phosphorhaltigen oder borhaltigen Säure und eines Amins oder Imins,
b) das Salz einer nicht phosphorhaltigen und nicht borhaltigen Säure und eines Amins oder Imins, und
c) die char-bildende Verbindung
in einer versteckten, verkleideten oder verkapselten Form zugegen sind.

9. Zusammensetzung nach Anspruch 8, wobei
a) das Salz einer phosphorhaltigen oder borhaltigen Säure und eines Amins oder Imins,
b) das Salz einer nicht phosphorhaltigen und nicht borhaltigen Säure und eines Amins oder Imins, und
c) die char-bildende Verbindung
in einem Polymer versteckt, verkleidet oder verkapselt sind.

10. Pseudo-Pigmentzusammensetzung zur Verwendung in einer Zusammensetzung nach Anspruch 8, umfassend:
a) das Salz einer phosphorhaltigen oder borhaltigen Säure und eines Amins oder Imins,
b) das Salz einer nicht phosphorhaltigen und nicht borhaltigen Säure und eines Amins oder Imins,
c) die char-bildende Verbindung, und
d) ein polymeres Verkapselungsmaterial.

11. Zusammensetzung nach Anspruch 9 oder 10, wobei das Verkapselungspolymer aus Melamin-Formaldehyd-Polymer, Harnstoff Formaldehyd-Polymeren, Polyacrylsäure, Styrol-Acrylpolymer, vernetztem Polyacrylamid, vernetzten Acrylamid-Natriumacrylat-Copolymeren, vernetzten Polyhydroxyethylacrylaten, Gelatine, Cellulose-Derivaten, Polyvinylalkoholen, Styrol-Anhydrid-Copolymeren, Polyvinylpyrrolidonen und Stärken selektiert ist.

12. Verwendung einer Zusammensetzung nach einem beliebigen der Ansprüche 1-11 zum Beschichten und Lasermarkieren von Substraten.

13. Verfahren zur Herstellung der Pseudo-Pigmente nach Anspruch 10 oder 11, das Emulgieren einer wässrigen Zusammensetzung umfasst, die umfasst:
a) das Salz einer phosphorhaltigen oder borhaltigen Säure und eines Amins oder Imins,
b) das Salz einer nicht phosphorhaltigen und nicht borhaltigen Säure und eines Amins oder Imins,
c) die char-bildende Verbindung, und
d) eine geeignete Monomermischung oder ein geeignetes Reaktionsharz; oder eine geeignete wässrige Polymerpräparation
in Wasser nicht mischbare Flüssigkeit in Gegenwart eines amphiphatischen Stabilisators, um eine Emulsion zu bilden, die einen mittleren wässrigen Tröpfchengrößendurchmesser unter 30 Mikron aufweist; bei Ausgehen von der obenerwähnten Monomermischung, die Polymerisationsreaktion herbeiführt, um die Verkapselung zu bilden; bei Ausgehen vom obenerwähnten Reaktionsharz, das Polykondensation herbeiführt, um die Verkapselung zu bilden; Entfernen des Wassers auf weniger als 5 % des Pseudo-Pigment-Trockengehalts und Isolieren des Pseudo-Pigments.

14. Substrat, das mit einer Zusammensetzung nach einem beliebigen der Ansprüche 1-11 beschichtet ist.

15. Verfahren zur Herstellung eines markierten Substrats, das folgende Schritte umfasst:
i) Beschichten eines Substrats mit der Zusammensetzung nach einem beliebigen der Ansprüche 1-11 und
ii) Aussetzen jener Teile des beschichteten Substrats der Energie eines Laserstrahls, wo eine Markierung beabsichtigt ist.

16. Substrat nach Anspruch 14 oder das Verfahren nach Anspruch 15, wobei das Substrat eine dünne Polypropylenfolie ist, die eine biaxial orientierte Polypropylenfolie (BOPP) einschließt.

17. Substrat nach Anspruch 14 oder das Verfahren nach Anspruch 15, wobei das Substrat aus pharmazeutischen Dosierungsformen, Nahrungsmittel, Papier, Verpackungskarton, Aufklebern, Glas, Textilien, Polymeren und Metallen selektiert ist.

## Revendications

1. Une composition de revêtement pour marquer des substrats comprenant
a) un solvant sélectionné parmi l'eau, les alcanols C₁₋₄, les cétones C₃₋₆, les éthers C₄₋₆, les nitriles C₂₋₃, le nitrométhane, le diméthylsulfoxyde, le diméthylformamide, le diméthylacétamide, le N-méthyl pyrrolidone et le sulfolane, où les alcanols C₁₋₄ peuvent être substitués par l'alcoxy C₁₋₄, ou des mélanges de ceux-ci,
b) un sel d'un acide contenant du phosphore ou du bore et d'un amine ou imine,
c) un sel d'un acide ne contenant ni phosphore et ni bore et d'un amine ou imine, et
d) un liant sélectionné parmi les homo- et copolymères de type acétate de vinyle, (méth)acrylique et styrène ; la carboxyméthylcellulose ; les liants de type amidon ; et le polymère de méthacrylate de diméthylaminoéthyle / méthacrylate de méthyle,
mais ne comprenant ni amiante ni fibre de verre.

2. La composition selon la revendication 1 où le solvant est de l'eau.

3. La composition selon la revendication 1 ou la revendication 2 où le sel d'un acide contenant du phosphore ou du bore et d'un amine ou imine est le phosphate d'ammonium.

4. La composition selon l'une quelconque des revendications 1 à 3 où le sel d'un acide ne contenant ni phosphore ni bore et d'un amine ou imine est le sulfate d'ammonium.

5. La composition selon l'une quelconque des revendications 1 à 4 où le liant est sélectionné parmi les homo- et copolymères de type acétate de vinyle, (méth)acrylique et styrène ; la carboxyméthylcellulose ; les liants de type amidon ; et le polymère de méthacrylate de diméthylaminoéthyle / méthacrylate de méthyle.

6. La composition selon l'une quelconque des revendications 1-5 comprenant en plus un composé formant un carbonisat sélectionné parmi la sucrose, la sucralose, 2-éthanolamine et 2-(2'-aminoéthoxy)éthanol.

7. La composition selon l'une quelconque des revendications 1 à 6 sous forme d'une encre transparente ou blanche marquable au laser.

8. La composition selon la revendication 6 où
a) le sel d'un acide contenant du phosphore ou du bore et d'un amine ou imine,
b) le sel d'un acide ne contenant ni phosphore ni bore et d'un amine ou imine, et
c) le composé formant un carbonisat
sont présents sous une forme cachée, déguisée ou encapsulée.

9. La composition selon la revendication 8 où
a) le sel d'un acide contenant du phosphore ou du bore et d'un amine ou imine,
b) le sel d'un acide ne contenant ni phosphore ni bore et d'un amine ou imine, et
c) le composé formant un carbonisat
sont cachés, déguisés ou encapsulés dans un polymère.

10. Composition de pseudo pigments à utiliser dans une composition selon la revendication 8 comprenant
a) le sel d'un acide contenant du phosphore ou du bore et d'un amine ou imine,
b) le sel d'un acide ne contenant ni phosphore ni bore et d'un amine ou imine, et
c) le composé formant un carbonisat, et
d) un matériau polymérique d'encapsulation.

11. La composition selon la revendication 9 ou 10 où le polymère d'encapsulation est sélectionné parmi le polymère de mélamine-formaldéhyde, les polymères d'urée-formaldéhyde, l'acide polyacrylique, le polymère styrène-acrylique, le polyacrylamide réticulé, les copolymères d'acrylamide-acrylate de sodium réticulés, les polyhydroxyéthylacrylates réticulés, la gélatine, les dérivés de la cellulose, les alcools polyvinyliques, les copolymères de styrène-anhydride, les polyvinylpyrrolidones et les amidons.

12. Utilisation d'une composition selon l'une quelconque des revendications 1 à 11 pour le revêtement et le marquage laser de substrats.

13. Un procédé de fabrication des pseudo pigments selon la revendication 10 ou 11 comprenant l'émulsification d'une composition aqueuse comprenant
a) le sel d'un acide contenant du phosphore ou du bore et d'un amine ou imine,
b) le sel d'un acide ne contenant ni phosphore ni bore et d'un amine ou imine, et
c) le composé formant un carbonisat, et
d) un mélange de monomères approprié ou une résine réactive appropriée ; ou une préparation polymérique aqueuse appropriée
dans un liquide immiscible dans l'eau en présence d'un stabilisant amphiphatique pour former une émulsion ayant une gouttelette aqueuse d'un diamètre moyen inférieur à 30 microns ; en cas de démarrage à partir du mélange de monomères susmentionné l'amorce d'une réaction de polymérisation pour former l'encapsulation ; en cas de démarrage à partir de la résine réactive susmentionnée l'amorce d'une polycondensation pour former l'encapsulation ; l'extraction de l'eau jusqu'à moins de 5% de la teneur sèche en pseudo pigment et l'isolation des pseudo pigments.

14. Un substrat revêtu par une composition selon l'une quelconque des revendications 1-11.

15. Un procédé de préparation d'un substrat marqué, comprenant les étapes
i) du revêtement d'un substrat avec la composition de l'une quelconque des revendications 1 à 11, et
ii) de l'exposition des parties du substrat revêtu où un marquage est voulu, à une énergie au moyen d'un rayon laser.

16. Le substrat de la revendication 14 ou le procédé de la revendication 15 où le substrat est un film mince de polypropylène incluant un film de polypropylène bi-orienté (BOPP).

17. Le substrat de la revendication 14 ou le procédé de la revendication 15 où le substrat est sélectionné parmi les formes de dosage pharmaceutiques, les denrées alimentaires, les papiers, les cartons d'emballage, les étiquettes adhésives, les textiles, les polymères et les métaux.
